# FASCICULE DE BREVET EUROPEEN

(11) **EP 0 319 430 B1**
(45) Date de publication et mention de la délivrance du brevet: **24.03.1993**
(21) Numéro de dépôt: 88403059.4
(22) Date de dépôt: 02.12.1988
(51) Int. Cl.: G06F 7/00, G06F 15/347

(54) **Dispositif et procédé à mémoire tampon, notamment pour la transposition matricielle ligne-colonne de séquences de données**
Pufferspeichergerät und -verfahren, insbesondere für die Matrixtransposition von Datenfolgen
Buffer memory device and method, particularly for matrix transposition of data sequences

(30) Priorité: 03.12.1987 FR 8716781
(43) Date de publication de la demande: 07.06.1989
(73) Titulaire: FRANCE TELECOM, 75015 Paris (FR); TELEDIFFUSION DE FRANCE S.A., 92542 Montrouge Cédex (FR)
(72) Inventeur: Penard, Pierre, F-35000 Rennes (FR); Quenard, Philippe, F-35690 Acigne (FR)
(74) Mandataire: Corlau, Vincent

(56) Documents cités:
- GB-A- 2 082 016
- US-A- 3 922 643

## Description

Le domaine de l'invention est celui des dispositifs et procédés électroniques susceptibles d'assurer la transposition de toute matrice carrée de taille paire, dont les éléments sont fournis en séquence.

Plus précisément, le dispositif selon l'invention a pour fonction de réaliser le traitement d'un flot de données, dans une mémoire tampon spécifique, traitement consistant à effectuer une transposition ligne/colonne de séquences de mots, séquences représentatives de matrices de données, dans le flot de données traité.

Ce dispositif trouve une application préférentielle dans le domaine des compressions d'informations vidéo. En effet, de nombreuses méthodes de codage d'informations vidéo sont basées sur une opération préalable de transformation fonctionnelle de l'image. La transformation de l'image porte généralement sur des blocs élémentaires d'images, c'est-à-dire des matrices de points adjacents, résultant d'un découpage de l'image au moyen d'une "grille de découpage". Chaque bloc élémentaire subit ensuite un traitement et un codage spécifiques, par exemple pour obtenir une compression d'informations.

L'un des codages courants utilisé consiste à effectuer une "Transformée Cosinus Discrète" (TCD), et est particulièrement adapté tant par ses qualités de transformation fonctionnelle, que par l'existence d'algorithmes permettant son implantation câblée. Or, l'application d'un traitement par TCD implique de réaliser successivement une TCD "ligne", puis une TCD "colonne" sur chaque bloc matriciel d'images.

L'une des applications préférentielles de l'invention est donc de fournir un dispositif à mémoire tampon permettant de réaliser une opération de transposition des blocs élémentaires d'images, fournis sous forme d'un flot de séquences de données, entre une opération de traitement par TCD "ligne" et une opération de TCD "colonne".

On connaît déjà des dispositifs et procédés à mémoire tampon permettant d'assurer ce type d'opération de transposition.

Dans les systèmes connus, de même que dans l'invention, le principe de fonctionnement consiste à écrire, en un emplacement mémoire spécifique, une séquence source représentative d'un bloc élémentaire, matriciel, d'image, (sous-image), puis à lire les données ainsi mémorisées dans un certain ordre différent de l'ordre d'écriture, de façon à obtenir en sortie une séquence transposée du bloc d'images.

Un premier dispositif connu consiste à utiliser deux mémoires distinctes. On écrit la séquence source Sᵢ dans l'une des mémoires, tandis qu'on lit, de façon transposée, la séquence S^{t}ᵢ₋₁ dans la seconde mémoire, et ainsi de suite de façon alternée pour les séquences Sᵢ₊₁, Sᵢ₊₂, ...

Selon ce dispositif et cette méthode de transposition, on obtient une bonne rapidité de traitement, mais on accapare une place mémoire importante. La capacité mémoire disponible, sur silicium, doit en effet correspondre au volume de données de deux blocs d'images élémentaires.

Selon un deuxième procédé connu, décrit par exemple dans le document du brevet britannique antérieur GB-A-2 082 016 (NV PHILIPS), on peut n'utiliser qu'une seule mémoire, dans laquelle on effectue successivement, et alternativement, une écriture d'une séquence source, puis la lecture transposée de la séquence transposée correspondante.

Cette seconde méthode présente l'avantage de diminuer par deux l'encombrement accaparé. En contre-partie, elle présente l'inconvénient de diminuer également fortement la vitesse maximale de fonctionnement du traitement de transposition.

Dans une autre variante connue décrite dans le document de brevet des Etats-Unis US-A-3 922 634 (Poole), appliquée à la compression de signaux téléphoniques bloc par bloc, on effectue une opération de lecture et une opération d'écriture sur la mémoire au cours de chaque cycle d'adressage, selon des séquences distinctes. Toutefois, le fonctionnement de ce dispositif impose que chaque bloc de données soit complètement écrit avant de pouvoir en commencer la lecture.

On conçoit qu'il serait plus favorable de pouvoir obtenir un recouvrement des opérations de lecture et d'écriture de chaque bloc dans la mémoire tampon. Tel est l'objectif de l'invention, de façon à permettre d'obtenir simultanément une rapidité optimale et un encombrement minimal de transposition.

Plus précisément, un premier objectif de l'invention est d'optimiser en même temps, au moyen d'un même dispositif à mémoire tampon, les deux paramètres de vitesse de fonctionnement et d'encombrement sur silicium.

Un autre objectif de l'invention est de fournir une architecture de mémoire, et un procédé d'adressage d'une telle mémoire, en écriture et en lecture, assurant la transposition de séquences de données, notamment de séquences représentatives de blocs d'images élémentaires subissant, par exemple, un traitement par TCD bidimensionnelle. Le dispositif et le procédé selon l'invention, permettent de réaliser la transposition en temps réel, sans duplication de l'espace mémoire qui est nécessaire au stockage d'un bloc élémentaire de sous-image.

Ces objectifs sont atteints à l'aide d'un dispositif à mémoire tampon, notamment pour la transposition matricielle ligne/colonne de séquences de mots (n x n) mots (n entier pair) du type des blocs élémentaires d'images en télévision numérique, chaque séquence source étant transformée en séquence transposée, où ladite mémoire tampon présente une capacité de (n x n) mots, ladite mémoire tampon est répartie en deux demi-plans identiques de mémorisation, muni chacun de moyens individuels de lecture/écriture et de moyens individuels d'adressage,
et ledit dispositif comprenant des moyens de séquencement des opérations de lecture/écriture desdits demi-plans de mémorisation comprenant:
- des moyens de génération d'un cycle d'adressage, ledit cycle d'adressage étant constitué de quatre sous-cycles d'adressage, correspondant respectivement à 1) une écriture ligne à ligne de la représentation matricielle d'une desdites séquences de mots 2) une lecture colonne à colonne de ladite représentation 3) une écriture colonne à colonne de la représentation matricielle d'une deuxième desdites séquences de mots 4) une lecture ligne à ligne de ladite représentation, avec le sous-cycle 3) suivant immédiatement le sous-cycle 1) ; le sous-cycle 4) suivant immédiatement le sous-cycle 2) et le sous-cycle 2) commençant à l'instant où on commence à écrire la dernière ligne dans le sous-cycle 1),
- des moyens de commande de l'exécution d'une succession de couples d'opérations de lecture/écriture, chaque couple comprenant simultanément une opération de lecture sur un desdits demi-plans de mémorisation, et une opération d'écriture sur l'autre demi-plan.

L'invention a également pour objet un procédé de transposition matricielle ligne/colonne de séquences de (n x n) mots, notamment du type des blocs élémentaires d'images en télévision numérique, au moyen d'un dispositif à mémoire tampon recevant en entrée des séquences source, et fournissant en sortie les séquences transposées correspondantes,
ladite mémoire tampon présentant une capacité de (n x n) mots et étant constituée de deux demi-plans identiques de mémorisation associés chacun à des moyens individuels de lecture/écriture,
procédé consistant à remplir la mémoire tampon dans l'ordre d'occurrence des mots de chacune desdites séquences source en inscrivant sélectivement chaque mot dans l'un desdits demi-plans mémoire, de façon à permettre de lire chaque séquence transposée dans ladite mémoire tampon, en lisant sélectivement, dans l'ordre transposé, chaque mot courant de la séquence transposée dans le demi-plan de mémorisation dans lequel il était chargé,
lesdits moyens individuels de lecture/écriture fonctionnant simultanément, de façon à réaliser une opération de lecture du mot courant de la séquence transposée courant dans l'un des demi-plans de mémorisation, et une écriture du mot courant de la séquence source courante dans l'autre demi-plan de mémorisation,
et en ce que l'opération de remplissage de la mémoire tampon est effectuée selon un cycle d'adressage, ledit cycle d'adressage étant constitué de quatre sous-cycles d'adressage, correspondant respectivement à 1) une écriture ligne à ligne de la représentation matricielle d'une desdites séquences de mots 2) une lecture colonne à colonne de ladite représentation 3) une écriture colonne à colonne de la représentation matricielle d'une deuxième desdites séquences de mots 4) une lecture ligne à ligne de ladite représentation, avec le sous-cycle 3) suivant immédiatement le sous-cycle 1) ; le sous-cycle 4) suivant immédiatement le sous-cycle 2) et le sous-cycle 2) commençant à l'instant où on commence à écrire la dernière ligne dans le sous-cycle 1).

Avantageusement, ladite opération de remplissage s'effectue en affectant les mots de rang pair de la séquence source dans un premier demi-plan de mémorisation, et les mots de rang impair de la séquence source dans le second demi-plan, tout en prenant soin de croiser l'affectation de parité, dévolue à chaque demi-plan de mémorisation, à chaque fois que le rang du mot courant de la séquence source est un multiple de la base n de la séquence.

D'autres caractéristiques et avantages de l'invention apparaîtront à la lecture suivante de la description de modes de réalisation préférentiels de l'invention, donnés à titre illustratif, et des dessins annexés dans lesquels :
- la figure 1 représente l'organisation des adresses d'un bloc élémentaire d'images 4x4 dans une mémoire tampon de transposition suivant l'invention;
- la figure 2 est un tableau récapitulatif des accés en mémoire (lecture et écriture), pour quelques cycles de transposition de blocs élémentaires k, k+1, k+2, au moyen d'une mémoire tampon du type de la figure 1;
- la figure 3 schématise la décomposition de la mémoire tampon de la figure 1 en deux plans parallèles;
- la figure 4 illustre un mode de réalisation de la mémoire tampon de transposition selon l'invention pour des blocs élémentaires 8x8;
- la figure 5 est un schéma fonctionnel du principe de fonctionnement d'un dispositif à mémoire de transposition 8x8 selon l'invention;
- la figure 6 est schéma d'une tranche de décodeur du dispositif de la figure 5;
- la figure 7 est un chronogramme des signaux de validation de la tranche de décodeur de la figure 6.

Le fonctionnement des modes de réalisation 4x4 et 8x8 de la mémoire de transposition représentés dans les dessins obéit à deux principes de conception et fonctionnement :
- afin de permettre la réalisation simultanée d'une lecture et d'une écriture sur la mémoire, celle-ci est divisée en deux plans disposant chacun de leur propre dispositif de lecture et d'écriture;
- afin d'éviter les conflits d'accés en lecture/écriture, la mise en oeuvre de l'invention exige une décorrélation de l'ordre d'adressage des mots en mémoire tampon par rapport à leurs numéros d'ordre dans le bloc d'images carré source correspondant.

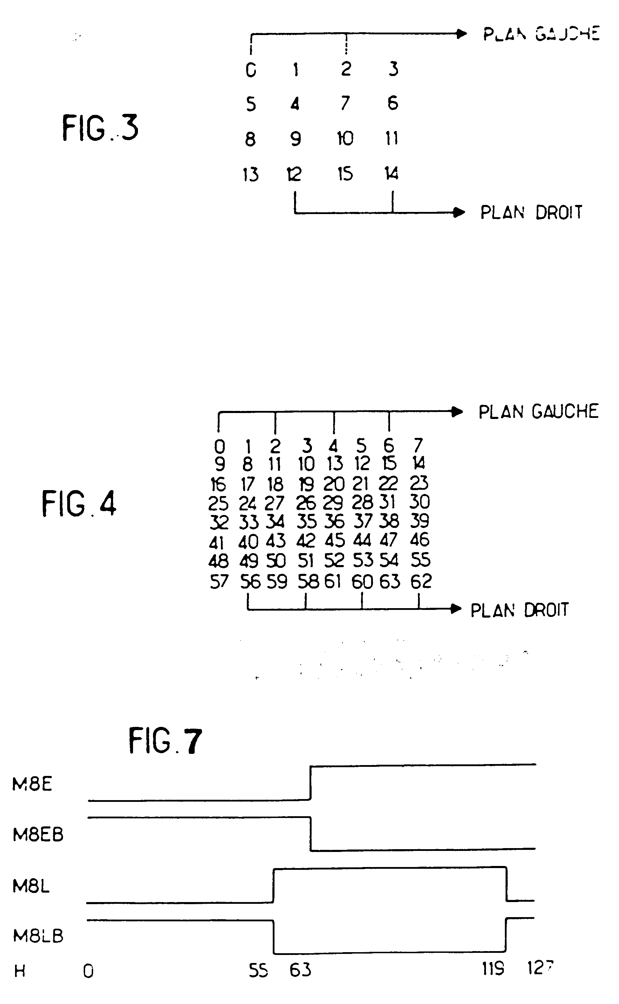

Le premier principe sera plus particulièrement illustré par la description des figures 3, 4 et 5.

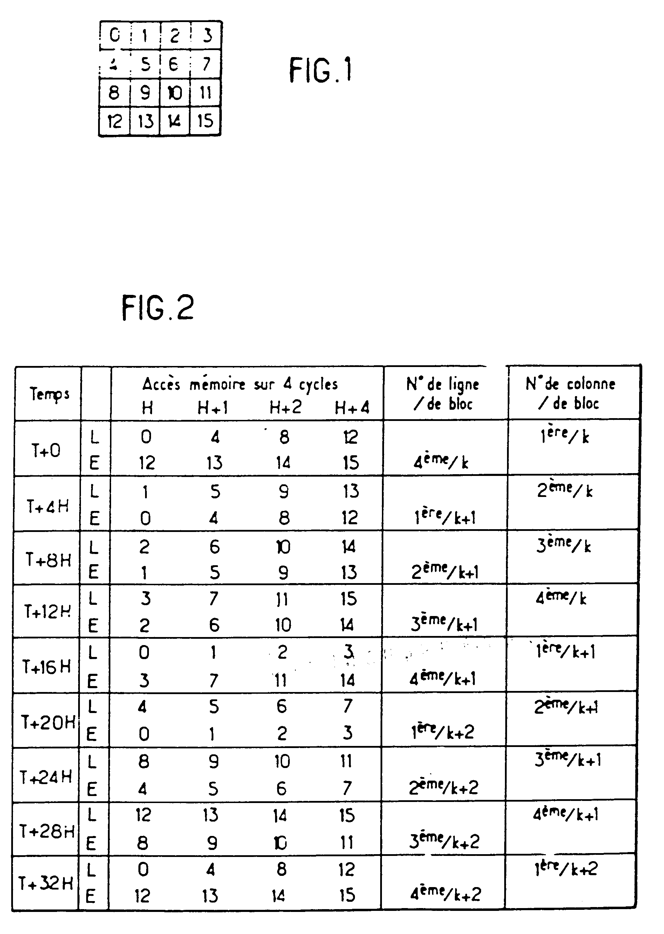

Le second principe va être plus particulièrement illustré ci-après à propos de la description de la mémoire de transposition 4x4 de la figure 1.

### Exemple 1 : mémoire de transposition 4x4

L'organisation des adresses d'un bloc 4x4, et donc la disposition des mots dans une représentation matricielle de la mémoire de transposition suivant l'invention, est telle que représentée en figure 1.

Cette disposition respecte les deux principes posés plus haut :
- à l'initialisation, les mots reçus sont écrits en balayant la matrice de la gauche vers la droite et de haut en bas, aux adresses : 0-1-2-3-4-5-6-7-8-9-10-11. Dès l'écriture du mot X₁₂ en adresse 12, on peut commencer à lire la première colonne du bloc, et réaliser donc simultanément une lecture et une écriture de données;
- la décorrélation de l'adresse des mots stockés en mémoire et de leurs numéros d'ordre dans la séquence représentative du bloc d'images source, est effectué de la manière suivante : les adresses des mots des lignes impaires de la mémoire matricielle sont permutées deux à deux. On vérifiera aisément que le séquencement et l'organisation d'adresses proposés évite judicieusement tout accés simultané en lecture et en écriture à des mots d'adresses de même parité au sein de la mémoire.

On suivra plus en détail le fonctionnement du dispositif suivant l'invention à la lecture du tableau de la figure 2.

Chaque ligne du tableau correspond à l'exécution d'une série de quatre cycles élémentaires de lecture/écriture dans le dispositif à mémoire de transposition suivant l'invention.

La phase d'initialisation du fonctionnement n'est pas schématisée, et la première ligne du tableau correspond au début de la lecture transposée d'un bloc d'images k.

Lors de la première série de quatre cycles élémentaires (T+H à T+4H), les accés suivants en mémoire sont réalisés :
- en lecture : 0 puis 4, 8, 12, correspondant à la lecture transposée du bloc d'images k, c'est-à-dire la lecture de la mémoire matricielle suivant les colonnes (alors que l'écriture préalable du bloc k a été réalisée en ligne dans la mémoire),
   et simultanément;
- en écriture : 12, puis 13, 14, 15, c'est-à-dire la dernière ligne du bloc d'images k écrite à partir de la séquence source alimentant la mémoire.

Au cours de la série des quatre cycles élémentaires suivants, on écrit les données "lignes" provenant de la séquence source issue du bloc d'images "k+1", dans la "colonne" libérée par la lecture de la première série de la séquence transposée du bloc k, soit :
- en écriture : 0, puis 4, 8, 12,
   et simultanément, on poursuit la lecture transposée du bloc k :
- en lecture : 1, puis 5, 9, 13,
   et ainsi de suite, conformément au tableau de la figure 2.

En examinant en détail le séquencement des opérations de lecture/écriture, on pourra noter qu'une scission naturelle de la mémoire en un demi-plan pair, et en un demi-plan impair, provoque des conflits d'accès. En effet, par exemple, en (T + O), il faut faire une écriture du mot O et, simultanément, une écriture du mot 12 - de même parité - et donc situé physiquement dans le même demi-plan de mémorisation. On remédie à cette anomalie en adoptant l'organisation proposée en figure 3, dans laquelle les mots des lignes impaires de la matrice sont permutés deux à deux.

En d'autres termes, et d'une façon plus générale, l'organisation de la mémoire de transposition selon l'invention, consiste à scinder ladite mémoire en deux demi-plans contenant des mots, dont l'adresse a la même parité, en croisant toutefois cette parité à chaque fois que l'adresse s'incrémente de modulo la base de la matrice.

### Exemple d'une mémoire matricielle de transposition 8x8

Les implantations des adresses dans une mémoire matricielle 8x8, selon l'invention, sont représentées en figure 4.

L'organisation des adresses répond au même principe que pour la mémoire 4x4 décrite ci-dessus.

Les adresses des mots des lignes impaires sont interverties deux par deux. Plus généralement, le bon fonctionnement du système est assuré dès que les mots sont de même parité sur toutes les diagonales d'un bloc, ou que tout mot d'un bloc est entouré de voisins "lignes" et "colonnes" de parité opposée.

Cette solution est la plus simple du point de vue de la conception logique du décodeur d'adresses de la mémoire.

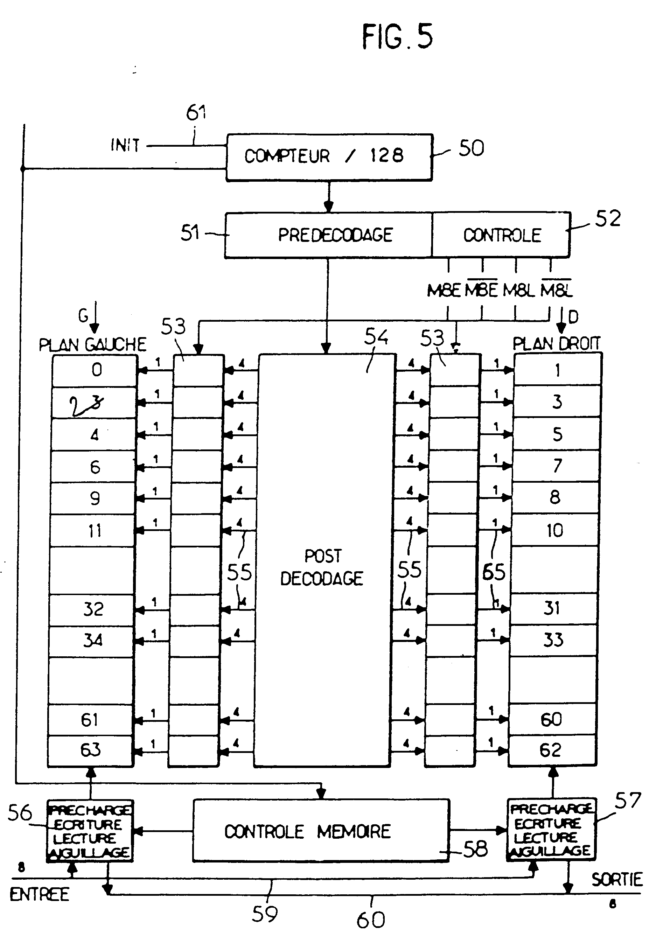

En fait, cette règle peut être appliquée à toute matrice (nxn) avec n : nombre pair. Un schéma bloc représentatif d'un mode de réalisation concret d'une mémoire 8x8 selon l'invention est présenté en figure 5.

On distingue, dans le schéma de principe de la figure 5 :
- un compteur binaire six bits 50, fournissant les 128 adresses caractéristiques d'un cycle complet (64 lectures et 64 écritures).
- des circuits logiques 51, 52 qui implémentent un système de prédécodage/postdécodage des adresses, permettant de diminuer le nombre d'entrées des portes nécessaires au décodage, et par conséquent le nombre de transistors.

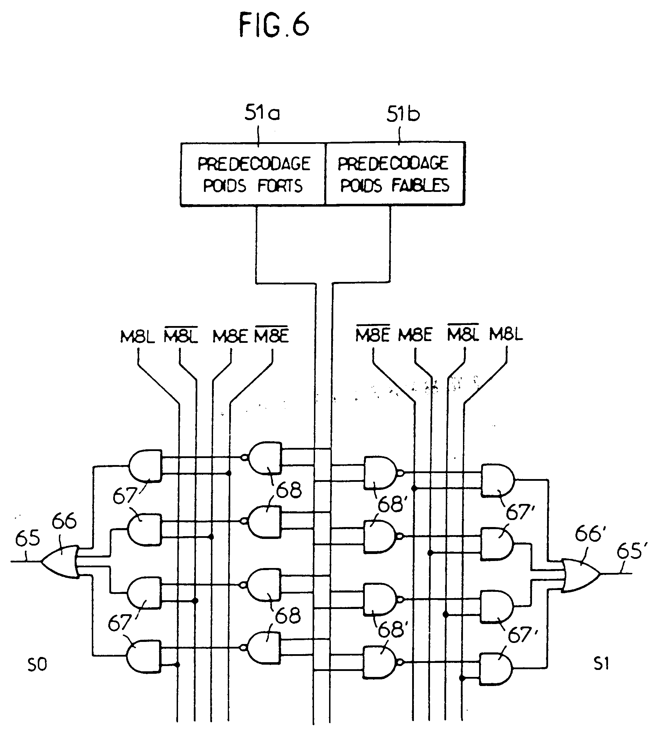

Le fonctionnement de cette technique est détaillé plus loin, en relation avec la figure 6 illustrant le schéma d'une tranche 53 du décodeur.

L'analyse du déroulement d'une séquence montre qu'on peut décomposer logiquement l'accés à chaque mot mémoire à partir des sigaux suivants :
- un cycle de comptage par pas de 1 en lecture;
- un cycle de comptage par pas de 1 en écriture;
- un cycle de comptage par pas de 8 en lecture;
- un cycle de comptage par pas de 8 en écriture.

Ces différents signaux M8E, M8L et leurs compléments M8EB, M8LB, sont fournis par le circuit logique de contrôle 52, à partir des informations fournies par le compteur 50.

La figure 7 représente le chronogramme des signaux de validation M8E, M8L, M8EB, M8LB. On constate que le recouvrement des signaux dure 8 périodes d'horloge dans le cas d'une matrice 8x8.

De cette manière, le séquencement de l'accés en mémoire est assuré par les circuits 53 correspondant à chaque adresse de la mémoire, tant en plan droit qu'en plan gauche. Ces circuits 53 reçoivent en entrée d'une part, des signaux provenant des circuits de prédécodage 51 et postdécodage 54, et d'autre part, les signaux de contrôle provenant du circuit logique 52. Ces circuits 53 fournissent simultanément, dans chaque demi-plan de mémorisation, un signal de sélection du mot à lire et du mot à écrire. On effectuera alors les opérations suivantes, au moyen des unités 56 et 57, et sous commande du circuit de contrôle de mémoire 58 : arrêt de précharge de la mémoire, lecture ou écriture, et aiguillage des données par commutation sélective des entrées/sorties des demi-plans sur les bus d'entrée/sortie.

Les séquences sources de bloc images transitent par le bus d'entrée 59, et les séquences transposées, lues en mémoire, sont transportées sur le bus de sortie 60.

La figure 6 détaille un mode de réalisation préférentiel des circuits logiques 53 correspondant à une tranche du décodeur de la figure 5.

Le signal 65, 65′ correspondant à chaque mot mémoire de la mémoire de transposition est fourni par un circuit OU recevant en entrée quatre signaux provenant de quatre circuits ET 67, 67′.

Chacun des circuit ET 67, 67′ reçoit deux entrées :
- une entrée connectée à l'un des signaux de contrôle M8E, M8L, M8EB, M8LB, issu des circuits logiques 52, et,
- une entrée provenant d'un circuit NON-ET 68, 68′. Chacun des circuits NON-ET est lui-même connecté sur la sortie des demi-circuits 51a, 51b de prédécodage des poids forts et des poids faibles des signaux du compteur 50. Chacun des demi-circuits de prédécodage reçoit trois fils d'adresses provenant d'un compteur binaire et fournit les 2³ - soit 8 - combinaisons possibles de ces trois poids d'adresses.

### Application à une opération de transposition entre TCD "ligne" et TCD "colonne"

La mémoire de transposition 8x8 de la figure 5 peut contenir 64 mots de 12 bits, et être utilisée pour réaliser l'opération de transposition d'un bloc de 8x8 ayant subi une TCD (Transformée en Cosinus Discrète) "ligne", et devant subir une TCD "colonne".

Les accés en lecture et en écriture se font simultanément au rythme de l'horloge commandant le compteur 50 de la figure 5.

La mémoire est contrôlée par un signal d'initialisation "INIT" 61, qui indique la présence du premier mot d'une séquence source de 64 mots, constituant une sous-image de 8x8 Pixels, en entrée de la mémoire. La séquence transposée du bloc transposé correspondant est disponible en sortie, avec un retard de 56 cycles élémentaires d'horloge.

Comme déjà noté précédemment, le principe de fonctionnement de ce dispositif consiste à remplir alternativement la mémoire en ligne puis en colonne, par des séquences sources de 64 données issues de l'opérateur TCD-LIGNE, et de réaliser conjointement la lecture en colonne, puis en ligne, des données stockées dans la mémoire de transposition, vers l'opérateur TCD-COLONNE.

Comme déjà mentionné, il est en effet possible de lire la première colonne d'un bloc k de 64 données dès que le mot X₅₆ est écrit en mémoire, et ce sans perturber le fonctionnement cyclique modulo 8 du dispositif. Dès lors, on peut lire en série le contenu de la première colonne (X₀, X₉, X₁₆...X₅₇), tout en écrivant la dernière ligne du bloc.

Le dispositif suivant l'invention, permet donc de réaliser l'opération de transposition intermédiaire, au cours d'un traitement de TCD bidimensionnel sur blocs d'images de nxn pixels, n pair, sans duplication de l'espace mémoire nécessaire au stockage d'une sous-image, et avec une bonne rapidité de traitement.

## Revendications

1. Dispositif à mémoire tampon, notamment pour la transposition matricielle ligne/colonne de séquences de (n x n) mots (n entier pair) du type des blocs élémentaires d'images en télévision numérique, à chaque séquence source étant associée une séquence transposée, où ladite mémoire tampon présente une capacité de (n x n) mots,
ladite mémoire tampon est répartie en deux demi-plans identiques de mémorisation, muni chacun de moyens individuels de lecture/écriture et de moyens individuels d'adressage,
et ledit dispositif comprenant des moyens de séquencement (52) des opérations de lecture/écriture desdits demi-plans de mémorisation qui contiennent :
- des moyens de génération d'un cycle d'adressage, ledit cycle d'adressage étant constitué de quatre sous-cycles d'adressage, correspondant respectivement à 1) une écriture ligne à ligne de la représentation matricielle d'une desdites séquences de mots 2) une lecture colonne à colonne de ladite représentation 3) une écriture colonne à colonne de la représentation matricielle d'une deuxième desdites séquences de mots 4) une lecture ligne à ligne de ladite représentation, avec le sous-cycle 3) suivant immédiatement le sous-cycle 1) ; le sous-cycle 4) suivant immédiatement le sous-cycle 2) et le sous-cycle 2) commençant à l'instant où on commence à écrire la dernière ligne dans le sous-cycle 1),
- des moyens de commande de l'exécution d'une succession de couples d'opérations de lecture/écriture, chaque couple comprenant simultanément une opération de lecture sur un desdits demi-plans de mémorisation, et une opération d'écriture sur l'autre demi-plan.

2. Dispositif suivant la revendication 1, caractérisé en ce que lesdits moyens de séquencement (52) assurent, pour chaque série de n mots consécutifs, l'adressage alternatif de chacun desdits demi-plans (G,D) pour l'écriture desdits mots, le demi-plan choisi pour l'écriture du premier mot de chaque série de n mots variant alternativement.

3. Dispositif suivant l'une quelconque des revendications 1 à 3, notamment pour l'utilisation aux fréquences vidéographiques, caractérisé en ce qu'elle est constituée d'une mémoire statique comportant une cellule à six transistors.

4. Procédé de transposition matricielle ligne/colonne de séquences de (n x n) mots, notamment du type des blocs élémentaires d'images en télévision numérique, au moyen d'un dispositif à mémoire tampon recevant en entrée des séquences source fournissant en sortie les séquences transposées correspondantes,
ladite mémoire tampon présentant une capacité de (n x n) mots et étant constituée de deux demi-plans identiques de mémorisation associés chacun à des moyens individuels de lecture/écriture,
procédé consistant à remplir la mémoire tampon dans l'ordre d'occurrence des mots de chacune desdites séquences source en inscrivant sélectivement chaque mot dans l'un desdits demi-plans mémoire, de façon à permettre de lire chaque séquence transposée dans ladite mémoire tampon, en lisant sélectivement, dans l'ordre transposé, chaque mot courant de la séquence transposée dans le demi-plan de mémorisation dans lequel il était chargé,
lesdits moyens individuels de lecture/écriture fonctionnant simultanément, de façon à réaliser une opération de lecture du mot courant de la séquence transposée courant dans l'un des demi-plans de mémorisation, et une écriture du mot courant de la séquence source courante dans l'autre demi-plan de mémorisation,
et en ce que l'opération de remplissage de la mémoire tampon est effectuée selon un cycle d'adressage, ledit cycle d'adressage étant constitué de quatre sous-cycles d'adressage, correspondant respectivement à 1) une écriture ligne à ligne de la représentation matricielle d'une desdites séquences de mots 2) une lecture colonne à colonne de ladite représentation 3) une écriture colonne à colonne de la représentation matricielle d'une deuxième desdites séquences de mots 4) une lecture ligne à ligne de ladite représentation, avec le sous-cycle 3) suivant immédiatement le sous-cycle 1) ; le sous-cycle 4) suivant immédiatement le sous-cycle 2) et le sous-cycle 2) commençant à l'instant où on commence à écrire la dernière ligne dans le sous-cycle 1).

5. Procédé suivant la revendication 4, caractérisé en ce que ladite opération de remplissage s'effectue en commençant par affecter chaque mot de rang pair de la séquence source dans le second demi-plan, puis à croiser l'affectation de parité dévolue à chaque demi-plan de mémorisation à chaque fois que le rang du mot courant de la séquence source est un multiple de la base n de la séquence.

## Claims

1. Buffer memory device, in particular for the row/column matrix transposition of sequences of (n x n) words (n an even integer) of the digital television elementary image block type, a transposed sequence being associated with each source sequence, in which the said buffer memory has a capacity of (n x n) words, the said buffer memory is divided into two identical storage half-planes each provided with individual read/write means and individual addressing means and the said device comprising means (52) of sequencing the read/write operations for the said storage half-planes which contain:
- means of generating an addressing cycle, the said addressing cycle consisting of four addressing sub-cycles corresponding respectively to 1) row by row writing of the matrix representation of one of the said sequences of words 2) column by column reading of the said representation 3) column by column writing of the matrix representation of a second of the said sequences of words 4) row by row reading of the said representation, with sub-cycle 3) immediately following sub-cycle 1); sub-cycle 4) immediately following sub-cycle 2) and sub-cycle 2) beginning at the instant at which writing of the last row in sub-cycle 1) is begun,
- means of controlling the execution of a succession of pairs of read/write operations, each pair simultaneously comprising a read operation on one of the said storage half-planes, and a write operation on the other half-plane.

2. Device according to Claim 1, characterised in that the said sequencing means (52) effect, for each series of n consecutive words, the alternate addressing of each of the said half-planes (G, D) in order to write the said words, the half-plane chosen for writing the first word of each series of n words varying alternately.

3. Device according to any one of Claims 1 to 3, in particular for use at videographic frequencies, characterised in that it consists of a static memory containing a cell with six transistors.

4. Method of row/column matrix transposition of sequences of (n x n) words, in particular of the digital television elementary image block type, by means of a buffer memory device receiving source sequences as input and providing the corresponding transposed sequences as output, the said buffer memory having a capacity of (n x n) words and consisting of two identical storage half-planes each associated with individual read/write means, which method consists in filling the buffer memory in the order of occurrence of the words of each of the said source sequences by selectively inscribing each word into one of the said memory half-planes in such a way as to enable each transposed sequence to be read from the said buffer memory, by selectively reading, in the transposed order, each current word of the transposed sequence from the storage half-planes into which it was loaded, the said individual read/write means operating simultaneously in such a way as to carry out a read operation for the current word of the current transposed sequence in one of the storage half-planes, and a write operation for the current word of the currant source sequence in the other storage half-plane, and in that the operation of filling the buffer memory is performed according to an addressing cycle, the said addressing cycle consisting of four addressing sub-cycles corresponding respectively to 1) row by row writing of the matrix representation of one of the said sequences of words 2) column by column reading of the said representation 3) column by column writing of the matrix representation of a second of the said sequences of word 4) row by row reading of the said representation, with sub-cycle 3) immediately following sub-cycle 1); sub-cycle 4) immediately following sub-cycle 2) and sub-cycle 2) beginning at the instant at which writing of the last row is sub-cycle 1) is begun.

5. Method according to Claim 4, characterised in that the said filling operation is carried out beginning by assigning each work of even rank of the source sequence in the second half-plane, and then interchanging the parity assignment allotted to each storage half-plane each time the rank of the current word of the source sequence is a multiple of the base n of the sequence.

## Patentansprüche

1. Pufferspeichergerät, insbesondere für die Zeilen/Spalten Matrixtransposition von Sequenzen von (n x n) Worten (n = gerade, ganzzahlig) vom Typ der Elementarblöcke von Bildern beim numerischen Fernsehen, bei dem jeder Quellsequenz eine transponierte Sequenz zugeordnet ist, wobei der Pufferspeicher eine Kapazität von (n x n) Worten aufweist,
und der Pufferspeicher in zwei identische Speicher-Halbebenen geteilt ist, die jeweils individuelle Mittel zum Lesen/Schreiben und individuelle Mittel zum Adressieren aufweisen
und das Gerät Mittel zum Sequenzieren (52) der Operationen Lesen/Schreiben in den Speicher-Halbebenen enthält, und zwar:
- Mittel zum Erzeugen eines Zyklusses zum Adressieren, der aus vier Unterzyklen zum Adressieren zusammengesetzt ist, nämlich:
1) einem zeilenweisen Schreiben der Matrixrepräsentation von einer der Wortsequenzen,
2) einem spaltenweisen Lesen der besagten Repräsentation,
3) einem spaltenweisen Schreiben der Matrixrepräsentation von einer zweiten der besagten Wortsequenzen und
4) einem zeilenweisen Lesen der besagten Repräsentation, wobei
der Unterzyklus 3) unmittelbar dem Unterzyklus 1) nachfolgt;
der Unterzyklus 4) unmittelbar dem Unterzyklus 2) nachfolgt und der Unterzyklus 2) zu dem Zeitpunkt einsetzt, an dem mit dem Schreiben der letzten Zeile in dem Unterzyklus 1) begonnen wird,
- Mittel zum Steuern der Ausführung einer Abfolge von Paaren von Operationen des Lesens/Schreibens, wobei jedes Paar gleichzeitig eine Leseoperation in einer der Speicher-Halbebenen und eine Schreiboperation in der anderen Speicher-Halbebene umfaßt.

2. Pufferspeichergerät nach Anspruch 1,
dadurch gekennzeichnet, daß das Mittel zum Sequenzieren (52) für jede Serie von aufeinanderfolgenden n Worten ein alternatives Adressieren an beide der Halbebenen (G,D) zum Schreiben der Worte gewährleistet, wobei die gewählte Halbebene zum Schreiben des ersten Wortes von jeder Serie von n Worten alternativ variiert wird.

3. Pufferspeichergerät nach einem der Ansprüche 1 bis 3, insbesondere für die Verwendung von Video-Frequenzen,
dadurch gekennzeichnet, daß das Pufferspeichergerät aus einem statischen Speicher besteht, der eine Zelle mit sechs Transistoren aufweist.

4. Verfahren zur Zeilen/Spalten Matrixtransposition von Sequenzen von (n x n) Worten, insbesondere des Typs der Elementarblöcke von Bildern beim numerischen Fernsehen, mit einem Pufferspeichergerät, das am Eingang Quellsequenzen empfängt und am Ausgang entsprechende transponierte Sequenzen bereitstellt und
der Pufferspeicher eine Kapazität von (n x n) Worten aufweist und aus zwei identischen Speicher-Halbebenen besteht, die jeweils individuelle Mittel zum Lesen/Schreiben haben, wobei das Verfahren besteht in dem
Auffüllen des Pufferspeichers in der Reihenfolge des Auftretens der Worte der beiden Quellsequenzen durch selektives Einschreiben der Worte in eine der Speicher-Halbebenen, um somit das Lesen jeder transponierten Sequenz in dem Pufferspeicher zu ermöglichen,
und durch das selektive Lesen in der transponierten Reihenfolge läuft jedes Wort der transponierten Sequenz in die Speicher-Halbebene, in die es geladen wurde, wobei
die individuellen Mittel zum Lesen/Schreiben gleichzeitig arbeiten, um somit eine laufende Leseoperation der transponierten Sequenz in einer der Speicher- Halbebenen und ein Schreiben des gegenwärtigen Wortes der ablaufenden Quellsequenz in die andere Speicher- Halbebene zu verwirklichen
und weiterhin darin besteht, daß
die Auffülloperation des Pufferspeichers durch einen Adressierzyklus verwirklicht ist, der aus vier Unterzyklen besteht, nämlich:
1) einem zeilenweisen Schreiben der Matrixrepräsentation einer der Wortsequenzen,
2) einem spaltenweisen Lesen der Repräsentation,
3) einem spaltenweisen Schreiben der Matrixrepräsentation von einer zweiten der Wortsequenzen und
4) einem zeilenweisen Lesen der Repräsentation, wobei
der Unterzyklus 3) unmittelbar dem Unterzyklus 1) folgt; der Unterzyklus 4) unmittelbar dem Unterzyklus 2) folgt und der Unterzyklus 2) zu dem Zeitpunkt einsetzt, an dem mit dem Schreiben der letzten Zeile in dem Unterzyklus 1) begonnen wird.

5. Verfahren nach Anspruch 4,
dadurch gekennzeichnet, daß die Auffülloperation anfänglich durch Zuweisung aller Worte der Quellsequenz mit geradem Rang in die zweite Halbebene ausgeführt wird und dannach durch Vertauschen der Zuweisung der zugefallenen Parität in jeder Speicher-Halbebene jedes Mal dann ausgeführt wird, wenn der Rang des laufenden Wortes der Quellsequenz ein Vielfaches der Basis n der Sequenz ist.
